Europäisches Patentamt

European Patent Office

Office européen des brevets

(11) Publication number: **0 504 970 A2**

# EUROPEAN PATENT APPLICATION

(21) Application number: **92200658.0**

(22) Date of filing: **09.03.92**

(51) Int. Cl.5: **A21D 6/00, A21D 8/00, A21D 10/00**

(30) Priority: **19.03.91 GB 9105765**

(43) Date of publication of application:
**23.09.92 Bulletin 92/39**

(84) Designated Contracting States:
**AT BE CH DE DK ES FR GB GR IT LI NL PT SE**

(71) Applicant: **UNILEVER N.V.**
**Burgemeester s'Jacobplein 1 P.O. Box 760**
**NL-3000 DK Rotterdam(NL)**

(84) **BE CH DE DK ES FR GR IT LI NL PT SE AT**

(71) Applicant: **UNILEVER PLC**
**Unilever House Blackfriars P.O. Box 68**
**London EC4P 4BO(GB)**

(84) **GB**

(72) Inventor: **Armfield, Duncan James**
**45, Meadowcroft**
**Heswall Hills Wirral , Merseyside(GB)**
Inventor: **King, David Michael**
**15 Sugarmills Circle**
**Fairport, New York 14550(US)**
Inventor: **Marsden, William James N.**
**25 Inverallan Drive, Bridge of Allan**
**Stirlingshire, Scotland FK9 4JR(GB)**

(74) Representative: **Hartong, Richard Leroy et al**
**Unilever N.V. Patent Division P.O. Box 137**
**NL-3130 AC Vlaardingen(NL)**

(54) **Improved sponge doughs.**

(57) The invention is concerned with sponge doughs having improved shelf life at ambient temperature.
It was found that frozen sponge doughs could be obtained but also dried sponge doughs having shelf lives ranging from 2 days to 2 years that have the properties of a fresh sponge dough.

EP 0 504 970 A2

According to a traditional bread-making process in the UK, a "sponge and dough" process is applied. According to this process, a sponge is prepared in advance of the main dough. The sponge is allowed to ferment for an extended period of time and to develop fully. The sponge is then added to the main "dough", which is usually prepared via a "short-time" process. The method yields bread with improved crumb structure, softness and flavour when compared to bread made by typical short-time processes (i.e. the main dough without the sponge).

However, the above process takes a long time to complete because of the fermentation time required by the sponge dough to completely develop. To perform the baking process within an acceptable period of time, nowadays most UK bakers bake bread from doughs which have only been fermented for a short time. However, this results in a poorer bread quality, in particular as far as the flavour is concerned.

Therefore, for quite some time, bakers in the UK have wished to combine the advantages of the "sponge and dough" method with short fermentation times for the main dough. At the same time they have sought to improve the flavour of bread made by short-time processing.

We have found a solution by which the advantages of the two processes can be combined.

Therefore, our invention is concerned with nonsourdough-like sponge doughs that have a shelf life at ambient temperature of at least 48 hours, in particular of 48 hours - 2 years. It is most helpful that the shelf life of our sponge doughs is at least 7 days.

The advantage of these sponge doughs is that the sponge dough is prepared for the baker and that it can then be used in admixture with a main dough at any moment that is preferred by the baker while the quality of the loaf of bread baked from this "sponge and dough" is about the same compared to the quality of a loaf of bread made from a "fresh" sponge dough and a main dough.

There are several ways in which a sponge dough having the required shelf life can be obtained.

Surprisingly, it was found that a sponge dough that is deep-frozen, i.e. having a temperature of less than -10°C, preferably less than -15°C, retains the properties that are essential for bread-making to a high extent. This is surprising because, during freezing, ice crystals are formed in the dough that might deteriorate the cell structure of the dough and, as a result, its properties. The water content of the deep-frozen dough can vary from 10-99 wt.%, preferably from 30-65 wt.%, most preferably from 40-55 wt.%.

It has been found that it is advantageous when the water content of the frozen sponge dough is higher than 40 wt.%, in particular 40-55 wt.%, and the fat content is 10 wt.% or less, preferably 0-5 wt.%.

Another sponge dough that meets the requirements of shelf life is a dried dough. Although all conventional drying methods such as roller drying, freeze-drying and spray-drying can be applied, it is preferred to make a roller-dried dough when increase of the flavour characteristics of a conventional dough composition is intended.

If it is preferred to increase the crumb and/or crust characteristics of the baked loaf of bread, it is better to make a freeze-dried sponge dough and to use this in the "sponge and dough" process.

The water content of all these dried sponge doughs is preferably 0-5 wt.%, while the fat content of these doughs is preferably 0-15 wt.%.

The dried sponge doughs can optionally be mixed with "dry" bread improver compositions, i.e. with bread improver compositions that do not contain water. Bread improver compositions that can be used, are listed e.g. in EP 421510. These bread improvers can comprise fat and/or oil, enzymes, such as amylase, glucose oxidase, cellulases, peroxidases, sulphidryl oxidase; sweeteners such as sucrose, glucose, fructose; high-intensity sweeteners, such as aspartame, emulsifiers such as monoglycerides, lecithins, DATA esters, sodium stearoyl lactylate; thickeners, such as starches (modified and unmodified), proteins, e.g. gelatin, carbohydrates, e.g. dextrose, sucrose, gums, and also ascorbic acid as an oxidising agent etc. In a preferred composition the dried sponge dough is mixed as a powdered material with a mixture of xylanase and glucose oxidase, optionally with ascorbic acid.

Part of the invention is also a mixture of a sponge dough and a main dough. The preferred ratio of this mixture is 60-95 wt.% of the main dough and 5-40 wt.% of the sponge dough, when wet. The amount of sponge dough will be 5-15 wt.% if a dried sponge dough is used.

The baked products that are obtainable after baking of the mixture of sponge dough and main dough are also part of the invention.

The different sponge doughs can be made in the following way :

1. Frozen sponge dough

a) A mixture is made of the conventional bread dough ingredients, i.e. flour, water, yeast and optionally fat, eggs, milk protein, enzymes, sugars and emulsifier. Sufficient water is added to this mixture to ensure that the water level in the end dough is 10-99 wt.%, preferably 30-65 wt.%, most preferably 40-55

2

wt.%. The fat content of the end dough should be at most 10 wt.%;

b) The dough mixture is fermented for at least 3 hours, preferably, for convenience' sake, 3-4 hours, at about 35-44°C;

c) The dough so obtained is frozen to a temperature of less than -10°C.

2. Roller-dried dough

a) The conventional bread-making ingredients are mixed, using amounts of fat and water such that the fat content is less than 10 wt.% and the water content is 10-99 wt.%, preferably 30-65 wt.%, most preferably 40-55 wt.%;

b) Fermenting is proceeded for at least 3 hours, preferably 3-4 hours, at 35-44°C;

c) Sufficient water is added to the fermented dough to ensure that it is easily flowable;

d) The external surface of a roller-drying drum is provided with a layer of the flowable mixture of c);

e) The dough layer is indirectly heated, preferably to 110-130°C, by circulating a heating medium through the drum until the water content of the dough is less than 5 wt.% while the drum is being rotated;

f) The dried dough layer is removed from the roller drum;

g) The dry flakes obtained in f) are milled and a roller-dried, milled sponge dough is recovered.

3. Freeze-dried sponge dough

In the freeze-drying method, the dough obtained after step b) of 1 or 2 above is freeze-dried in the conventional way. The freeze-dried product is milled and the milled product is recovered.

4. Spray-dried sponge dough

The dough obtained after step b) is spray-dried in the usual way. The spray-dried product can be milled, if necessary.

EXAMPLE I

A mixture was made of the following ingredients in the amounts mentioned :

|  | wt.% |
|---|---|
| Flour (50% Can and 50% Eur) | 42.6 |
| Salt | 1.1 |
| Yeast (red label) | 6.8 |
| Water | 46.9 |
| Sucrose | 0.9 |
| Dextrose | 0.4 |
| Malt extract | 1.3 |
|  | 100% |

This mixture was blended until a batter had been obtained. The batter was fermented for 4 hours at 41°C. The fermented product was transferred to a blast freezer and blast-frozen for 40 minutes, resulting in a frozen sponge dough.

EXAMPLE II

The procedure of Example I was performed up to freezing. To the batter so obtained, an additional amount of water (about 25 wt.% based on the batter) was added and thoroughly mixed with the batter.

The flowable mass thus obtained was transferred to the external surface of a roller drum. The drum was rotated slowly while being heated internally to 120°C.

The dried product was scraped from the drum and milled.

EXAMPLE III

A mixture was made, using the dried sponge dough obtained in Example II. This was added to a standard dough at 5% on flour. The combined sponge and dough was subjected to standard short-time fermentation (Charley Wood, 3 min.).

A loaf of bread was baked of this mixture ($\frac{1}{2}$ hour at 230°C). A taste comparison with a loaf of bread baked according to the conventional sponge and dough method, i.e. using a fresh sponge dough, revealed that the product made according to the invention had the same improved flavour impression as the product made, using the fresh sponge dough and certainly improved as compared with dough without either sponge. Also appearance, crust (colour and strength), crumb (colour and texture) and keeping qualities of the product according to the invention were improved as compared with products without either sponge. The dough handling in terms of amount of mixing is improved in our process because less mixing is required.

**Claims**

1. A non-sourdough-like sponge dough, characterized by a shelf life at ambient temperature of 2 days - 2 years.

2. A sponge dough according to Claim 1, wherein the shelf life is at least 7 days.

3. A sponge dough according to Claim 1 or 2, wherein the dough is deep-frozen.

4. A sponge dough according to Claim 3, wherein the dough has a water content of 10-99 wt.%, preferably 30-65 wt.%, most preferably 40-55 wt.%.

5. A sponge dough according to Claim 3 or 4, wherein the dough has a fat content of 0-10 wt.%.

6. A sponge dough according to Claims 3-5, wherein the dough has a water content of 40-55 wt.% and a fat content of 0-5 wt.%.

7. A sponge dough according to Claim 1 or 2, wherein the dough is a dried dough.

8. A sponge dough according to Claim 7, wherein the dough is a roller-dried dough.

9. A sponge dough according to Claim 7, wherein the dough is a freeze-dried dough.

10. A sponge dough according to Claim 7, wherein the dough is a spray-dried dough.

11. A sponge dough according to Claim 8, 9 or 10, wherein the dried dough is in the shape of milled particles.

12. A dried sponge dough according to Claim 7, wherein the dough has a water content of 0-5 wt.% and a fat content of 0-15 wt.%.

13. A dried sponge dough according to Claims 7-12, wherein the dough contains additionally a dry bread improver composition.

14. A dried sponge dough according to Claim 13, wherein the bread improver composition comprises at least one of the following components : a fat, enzymes, such as maltase, glucose oxidase, cellulases, peroxidases, sweeteners such as sucrose, glucose, fructose, aspartame, emulsifiers, such as monoglycerides, lecithins, DATA esters, sodium stearoyl lactylate, thickeners such as cellulose materials, dextroses, starches, gums, gelatin, proteins, antioxidants such as ascorbic acid.

15. A dried sponge dough according to Claim 13 or 14, wherein the bread improver composition comprises a mixture of glucose oxidase and xylanase.

16. Doughs consisting of a mixture of a main dough and a sponge dough according to Claims 1-15.

17. Doughs according to Claim 16, consisting of 60-95 wt.% of a main dough and 5-40 wt.% of the sponge dough.

18. Baked products, characterized in that they are obtained after baking of shaped doughs consisting of a dough according to Claims 16-17.

19. Use of a sponge dough in bread-making, characterized by the use of a roller-dried sponge dough according to Claim 8 to increase the flavour characteristics of a conventional dough composition.

20. Use of a sponge dough in bread-making, characterized by the use of a freeze-dried sponge dough according to Claim 9 to increase the crumb and/or crust characteristics of a loaf of bread baked from a dough containing the sponge dough.

21. A process for the preparation of deep-frozen sponge dough, wherein the following steps are performed:
a) mixing of the conventional bread dough ingredients with 10-99 wt.%, preferably 30-65 wt.%, most preferably with 40-55 wt.%, of water, while the fat level in the end dough is less than 10 wt.%;
b) fermenting the dough for at least 3 hours, preferably for 3-4 hours;
c) freezing the fermented dough to a temperature of less than -10°C.

22. A process for the preparation of milled, roller-dried sponge dough, wherein the following steps are performed :
a) mixing of the conventional bread dough ingredients with 10-99 wt.%, preferably 30-65 wt.%, most preferably 40-55 wt.%, of water, while the fat content in the end dough is 0-10 wt.%;
b) fermenting the dough for at least 3 hours, preferably for 3-4 hours;
c) adding water to the dough in an amount such that it becomes easily flowable;
d) providing the external surface of a roller-drying drum with the flowable dough of c);
e) heating the external dough layer by indirect heating until the layer has a water content of less than 5 wt.%, while the drum is being rotated.
f) removing dried flakes of dough from the surface of the roller drum;
g) milling the flakes of f) until a roller-dried, milled sponge dough is obtained.

23. A process for the preparation of freeze-dried sponge dough, wherein the following steps are performed:
a) mixing of the conventional dough-making ingredients;
b) fermenting the mixture for at least 3 hours;
c) freeze-drying of the fermented mixture;
d) milling of the freeze-dried product.

24. A process for the preparation of spray-dried sponge dough, wherein the following steps are performed:
a) mixing of the conventional dough-making ingredients;
b) fermenting the mixture for at least 3 hours;
c) spray-drying of the fermented mixture;
d) milling of the spray-dried product.